(19) Europäisches Patentamt
European Patent Office
Office européen des brevets

(11) Veröffentlichungsnummer: **0 142 066**
**B1**

(12) # EUROPÄISCHE PATENTSCHRIFT

(45) Veröffentlichungstag der Patentschrift: **25.11.87**

(51) Int. Cl.⁴: **C 09 B 67/48**, C 09 B 48/00, C 09 B 67/10

(21) Anmeldenummer: **84112615.4**

(22) Anmeldetag: **19.10.84**

(54) **Deckende gamma-Modifikation des unsubstituierten linearen trans-Chinacridons.**

(30) Priorität: **26.10.83 DE 3338806**

(43) Veröffentlichungstag der Anmeldung: **22.05.85 Patentblatt 85/21**

(45) Bekanntmachung des Hinweises auf die Patenterteilung: **25.11.87 Patentblatt 87/48**

(84) Benannte Vertragsstaaten: **CH DE FR GB IT LI**

(56) Entgegenhaltungen:
**EP-A-0 001 613**
**DE-A-2 753 357**
**DE-A-3 012 181**
**FR-A-2 238 732**
**FR-A-2 286 177**
**GB-A-2 043 094**
**US-A-3 017 414**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Spietschka, Ernst, Dr., Kirchweg 3, D-6270 Idstein/Taunus (DE)**
Erfinder: **Kroh, Adolf, Vorderstrasse 27, D-6251 Selters/Taunus (DE)**

**EP 0 142 066 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Gegenstand der Erfindung ist ein Verfahren zur Herstellung einer in den an Wendungstechnischen Eigenschaften deutlich verbesserten deckenden Form der γ-Kristallmodifikation des unsubstituierten linearen trans-Chinacridons. Sowohl die transparente als auch die deckende Form der γ-Kristallmodifikation des genannten Chinacridons Faben als hochechte Rotpigmente erhebliche technische Bedeutung zum Pigmentieren von Lacken und Anstrichstoffen und zum Einfärben von Kunststoffen erlangt.

Die γ-Kristallmodifikation des unsubstituierten linearen trans-Chinacridons kann nach verschiedenon Verfahren hergestellt werden, beispielsweise nach der US-PS-2 844 581 durch Salzvermahlung von kristallinem linearem Chinacridon (das z. B. nach der US-PS-2 821 529 durch Ringschluß von 2,5-Dianilino-3,5-dihydro-dialkylterephthalat in indifferenten Lösemitteln bei 225-300°C und Oxidation des isolierten Dihydrochinacridons mit milden Oxidationsmitteln erhalten wird) und Behandeln des Mahlgemisches mit Dimethylformamid. Nach der DE-OS-3 007 158 kann die γ-Kristallmodifikation des genannten Chinacridons in Pigmentform durch trockenes Vermahlen von hochkristalliner γ-Modifikation mit geringen Mengen Alaun und Nachbehandlung des Mahlguts mit verdünnter Schwefelsäure, gegebenenfalls unter Zusatz von oberflächenaktiven Mitteln, erhalten werden.

In der FR-PS-1 226 825 und der BE-PS-611 271 wird die Herstellung von linearem Chinacridon durch Ringschluß von 2,5-Dianilinoterephthalsäure in sauren Kondensationsmitteln beschrieben. Als saure Kondensationsmittel kommen insbesondere Polyphosphorsäure und deren saure Methylester in Frage. Das nach diesen Ringschlußverfahren erhaltene stark agglomerierte Rohchinacridon, das in schlecht kristalliner α-Modifikation anfällt, kann z. B. wie in der DT-PS-1 268 586, 1 184 881 oder 2 747 508 beschrieben, durch Behandlung mit Alkoholen bei erhöhten Temperaturen nach vorherigem Alkaliauszug oder Mahlen der alkoholischen Suspension vor dem Hochheizen, in die γ-Modifikation überführt werden.

Zur Herstellung der deckenden Form der γ-Modifikation nach diesen Verfahren erfolgt der Ringschluß in der 5 bis 7,5-fachen Menge hochkonzentrierter Polyphosphorsäure (85 - 86 % $P_2O_5$) oder in saurem Polyphosphorsäureester (83 - 85 % $P_2O_5$). Die Umwandlung des Rohchinacridons, das in der α-Modifikation vorliegt, in die γ-Modifikation erfolgt wie in DT-PS-1 268 586 bzw. 1 184 881 beschrieben. Zur Erzielung einer nahezu quantitativen Umwandlung in eine hochkristalline γ-Modifikation ist eine vorherige alkalische Behandlung unbedingt erforderlich. Die nach diesem Verfahren hergestellte deckende Form der γ-Modifikation eignet sich als Volltonpigment und zum Überfärben von anorganischen und organischen Pigmenten, zeigt jedoch im Glanzverhalten deutliche Mängel.

Es wurde nun gefunden, daß man die deckende Form der γ-Kristallmodifikation des unsubstituierten linearen trans-Chinacridons mit verbesserter Farbstärke und höherem Glanz der damit hergestellten Lackierung herstellen kann, indem man a) beim bekannten Ringschluß der 2,5-Di-phenylamino-terephthalsäure in hochkonzentrierter Polyphosphorsäure oder in saurem Polyphosphorsäureester zum Chinacridon, und/oder b) bei der bekannten Hydrolyse der nach a) erhaltenen Schmelze des Chinacridons, und/oder c) dem bekannten wäßrigen Alkaliauszug des nach b) erhaltenen Chinacridons, und/oder d) beim bekannten-Finish des nach a) bis c) erhaltenen Chinacridons 0,5 bis 10 Gewichtsprozent, bezogen auf Chinacridon, oberflächenaktiver Mittel zusetzt.

Als oberflächenaktive Mittel können kationaktive, anionaktive und nicht ionogene Mittel eingesetzt werden.

An kationaktiven quaternären Verbindungen seien beispielsweise folgende genannt, wobei die zugehörigen Anionen je nach Herstellungsart der kationischen organischen Verbindungen verschieden sein können, wie beispielsweise Halogenid-, Sulfat-, Alkoxysulfat- und/oder Alkoxyphosphationen:

Permethyliertes Talgfettpropylendiamin, Stearyltrimethylammonium, Dioctyldimethylammonium, Distearyldimethylammonium, Didecyldimethylammonium, Cetyltrimethylammonium, Benzylcocosalkyldimethylammonium, Dicocosalkyldimethylammonium, Cocosalkyl-2,4-dichlorbenzyl-dimethylammonium, Stearylbenzyl-dimethylammonium, Di-β-palmitinsäureisopropylesterdimethylammonium, permethyliertes N-Stearoyl-diäthylentriamin, permethyliertes N-Stearoyl-triäthylentetramin, Laurylpyridinium, 2-Hydroxy-5-chlor-1,3-xylylen-bispyridinium, 2-Hydroxy-5-isooctyl-1,3-xylylen-bispyridinium, 2-Hydroxy-5-t-butyl-1,3-xylylen-bispyridinium, 2-Hydroxy-5-n-nonyl-1,3-xylylen-bispyridinium, 2-Methoxy-5-isooctyl-1,3-xylylen-bispyridinium, 2-Hydroxy-5-isooctyl-1,3-xylylen-bisisochinolinium, 2-Hydroxy-5-isooctyl-1,3-xylylen-bisisochinolinium, Hexadexyltributylphosphonium, Äthyltrioctylphosphonium und Tetrabutylphosphonium.

An anionischen Verbindungen seien beispielsweise genannt langkettige Alkylsulfonate mit 8 - 22 C-Atomen im Alkylrest, Alkyl-(poly)-glykoläthersulfate, wie beispielsweise Lauryldiglykoläthersulfat, Alkylarylsulfonate, wie z. B. Dodecylbenzolsulfonsäure oder deren Salze, Alkylphenol-(poly)-glykolethersulfate, wie beispieslweise Tributylphenolpolyglykolethersulfat oder Nonylphenolpolyglykolethersulfat,-

Alkylsulfamidoacetate, wie z. B. Sinarolsulfamidoacetat, Fettsäuretauride, wie beispielsweise Kokosfettsäuretaurid, Fettsäure-N-methyltauride, wie z. B. Ölsäure-N-methyltaurid, Fettsäuresarkoside, wie beispielsweise Ölsäure- oder Kokosfettsäuresarkosid, Salze von Sulfobernsteinsäureestern, wie z. B. das Natrium- oder Kalium-salz des Diisodecylsulfobernsteinsäureesters oder Laurylsulfobernsteinsäureesters, und/oder Harzsäurederivate, z. B. des Typs Kolophonium.

Als nichtionogene Verbindungen seien genannt ein Kolophoniumderivat, wie beispielsweise Dehydroabietylamin der Formel

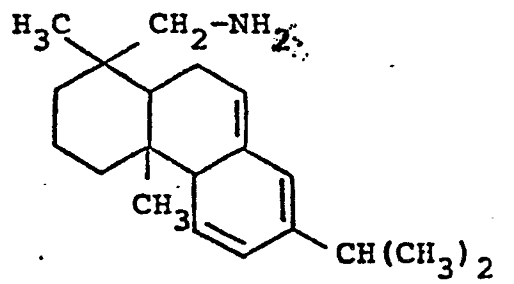

Die an sich bekannten Verfahrensstufen des Ringschlusses (zum Chinacridon), der Hydrolyse, des wäßrigen Alkaliauszugs und des Finish werden im Rahmen des erfindungsgemäßen Verfahrens bevorzugt wie folgt ausgeführt:

Der Ringschluß der 2,5-Di-phenylamino-terephthalsäure in hochkonzentrierter Polyphosphorsäure bzw. in saurem Polyphosphorsäuremethylester ($P_2O_5$-Gehalt 83 - 86 %) zum Chinacridon findet-vorzugsweise bei Temperaturen von 100-150° C, insbesondere bei 120 - 130° C in der 4- bis 4,5-fachen Gewichtsmenge an Kondensationsmittel statt.

Die das Reaktionsprodukt enthaltende Schmelze wird anschließend zur Hydrolyse in die 2,5- bis 3-fache Gewichtsmenge Wasser, vorzugsweise Eiswasser, gegeben und das Rohchinacridon isoliert, vorzugsweise abfiltriert, und mit Wasser neutral gewaschen.

Das so isolierte wäßrig-feuchte, ca. 15 - 25 %-ige Rohchinacridon wird in soviel Wasser suspendiert, daß nach Zusatz von Alkali, vorzugsweise Kaliumhydroxid oder Natriumhydroxid, die wäßrige Suspension 4 bis 10 %, vorzugsweise 5 bis 7,5 % Pigment und 0,3 bis 5 %, vorzugsweise 0,5 bis 2,5 %, Alkali enthält.

Die Suspension wird dann mehrere Stunden bei Temperaturen zwischen 50 und 150° C, vorzugsweise 75 bis 125° C, gegebenenfalls nach vorheriger Naßmahlung der Suspension mit einer Naßzerkleinerungsmaschine, wie z. B. einer Zahnscheibenmühle, verrührt. Danach wird filtriert und mit Wasser gewaschen.

Zum Finish mit gleichzeitiger Umwandlung in die γ-Modifikation wird das isolierte wäßrig-feuchte Chinacridon, das noch in der α-Modifikation vorliegt, in Lösemitteln, wie niederen Alkoholen oder Ketonen, suspendiert und bei Temperaturen zwischen 100 und 170° C, vorzugsweise 125 bis 150° C, mehrere Stunden verrührt. Anschließend wird das Lösemittel abdestilliert und das Pigment isoliert.

Der Zusatz der erfindungsgemäßen oberflächenaktiven Mittel kann bei allen vier Verfahrensstufen (Ringschluß, Hydrolyse, Alkaliauszug, Finish) erfolgen jedoch ist die Verbesserung der Pigmentqualität deutlich geringer, wenn der Zusatz nur beim Finish erfolgt. Der Zusatz beim Ringschluß wird vorzugsweise so ausgeführt, daß zunächst die 2,5-Diphenylamino-terephthalsäure in das Kondensationsmittel eingetragen wird und dann das oberflächenaktive Mittel zugesetzt wird.

Beim Zusatz bei der Hydrolyse wird das oberflächenaktive Mittel zweckmäßigerweise im Hydrolysewasser gelöst. Der Zusatz beim Alkaliauszug, der die bevorzugte Arbeitsweise darstellt, wird am vorteilhaftesten so vorgenommen, daß zunächst das Rohchinacridon in Wasser suspendiert wird, dann das oberflächenaktive Mittel, in Wasser gelöst oder suspendiert, zugetropft wird und schließlich das Alkali als wäßrige Lösung zugegeben wird.

Die Menge des oberflächenaktiven Zusatzstoffe zwischen 0,5 und 10 Gewichtsprozent und beträgt vorzugsweise 0,5 bis 5 Gewichts-%. Bevorzugte oberflächenaktive Mittel sind beispielsweise Cetyltrimethylammoniumchlorid, Alkyl$C_{20}$-$C_{22}$-trimethyl-ammoniumchlorid, Dioctyl-dimethyl-ammoniumchlorid, Benzyl-stearyl-dimethyl-ammoniumchlorid, Didecyl-dimethyl-ammoniumchlorid, Stearyl-trimethylammoniumchlorid, Distearyl-dimethyl-ammoniumchlorid, Cocosalkyl-dimethyl-benzyl-ammoniumchlorid, Dicocosalkyldimethyl-ammoniumchlorid, Dehydroabietylamin und saure Derivate des Kolophoniums, wie beispielsweise Abietinsäure.

Ein weiterer Vorteil des erfindungsgemäßen Verfahrens ist die Möglichkeit der Reduzierung des sauren Kondensationsmittels bei der Ringschlußreaktion auf die 4 bis 4,5-fache Menge, bezogen auf eingesetzte 2,5-Diphenylamino-terephthalsäure. Ohne Zusatzstoffe wird zur Erzielung vergleichbarer Deckkraft der Volltonlackierung mindestens die fünffäche Menge an Ringschlußmittel benötigt.

Die nach dem erfindungsgemäßen Verfahren hergestellten Pigmente stellen die reine γ-Kristallmodifikation des linearen unsubstituierten trans-Chinacridons in hochdeckender und gut kristalliner Form mit hervorragenden anwendungstechnischen Eigenschaften, mit gegenüber dem Stand der Technik deutlich verbessertem Glanz und Reinheit der Lackierung bei erhöhter Farbstärke dar.

Der gleiche positive Effekt der Verbesserung der Pigmentqualität kann durch geeignete Kombination äquivalenter Mengen von anionischen und kationischen oberflächenaktiven

Mitteln erzielt werden. Bei dieser Arbeitsweise können neben den weiter obengenannten, bevorzugt eingesetzten kationischen oberflächenaktiven Mitteln gleichzeitig anionaktive Hilfsmittel, insbesondere Alkylarylsulfonate, wie beispielsweise Dodecylbenzolsulfonat, Alkylphenolpolyglykoläthersulfate, wie Tributylphenolpolyglykoläthersulfat, und Sulfobernsteinsäureester, wie beispielsweise Diisodecylsulfobernsteinsäure-Natrium eingesetzt werden. Dabei können diese Zusatzstoffe in der gleichen Verfahrensstufe oder auch nacheinander in den verschiedenen Verfahrensstufen zugesetzt werden.

Das erfindungsgemäße Verfahren wird durch die nachstehenden Ausführungsbeispiele weiter erläutert. Die darin genannten Teile und Prozentangaben beziehen sich auf das Gewicht.

**Beispiel 1**

100 Teile 2,5-Dianilino-terephthalsäure werden bei 100-120° C unter Rühren in 450 Teile Polyphosphorsäure ($P_2O_5$-Gehalt 85,5 %) eingetragen, bis zur beendeten Reaktion (ca. 2 Stunden) bei dieser Temperatur verrührt und dann auf 1350 g Eiswasser gegeben, wobei die Hydrolysesuspension eine Temperatur von 15 - 20° C erreicht. Nach beendeter Hydrolyse wird das abgeschiedene Rohchinacridon abfiltriert und mit Wasser säurefrei gewaschen. Das so erhaltene wäßrig feuchte ca. 20 - 22 %-ige Rohchinacridon wird in 600 Teilen Wasser suspendiert. Dann wird eine Lösung aus 1,2 Teilen Dehydroabietylamin, 10,6 Teilen Wasser und 0,24 Teilen Essigsäure zugetropft und 30 Minuten verrührt. Anschließend werden 150 Teile 10 %-ige wäßrige Kalilauge zugegeben und mit Wasser auf insgesamt 1500 Teile ergänzt. Die Suspension wird dann 10 Stunden unter Rühren am Rückfluß gekocht, anschließend bei 70-80° C abfiltriert und mit Wasser neutral gewaschen. Das so isolierte wäßrig feuchte ca. 18 - 22 %-ige Chinacridon wird in 600 Teilen Isobutanol 80 %-ig suspendiert und im geschlossenen Gefäß 5 Stunden bei 145 -150° C verrührt. Danach wird mit Wasserdampf das Isobutanol abdestilliert und anschließend das Pigment abfiltriert, mit Wasser gewaschen und bei 80° C getrocknet. Die Pigmentausbeute beträgt mindestens 96 %.

Das auf diese Weise hergestellte blaustichigrote Pigment ist das lineare trans-Chinacridon in hochkristalliner γ-Modifikation. Es zeichnet sich durch hervorragende rheologische Eigenschaften aus. Die mit ihm hergestellten hochdeckenden Volltonlackierungen zeigen einen schleierfreien klaren Farbton und einen ganz hervorragenden Glanz.

Zum Vergleich wurde ein Pigment unter sonst gleichen Bedingungen, aber ohne Zusatz von oberflächenaktivem Mittel, hergestellt. Die Vergleichsfärbung ist in der Volltonlackierung deutlich matter mit milchigem Schleier. Zum Vergleich der Glanzwerte wurden die im Ofen eingebrannten Volltonfolienaufgüsse von unter gleichen Bedingungen hergestellten 7 %-igen Alkydmelaminharzlacken, die vor dem Aufguß auf eine Viskosität von 22 Sek. (gemessen im Fordbecher Ø 4 mm) mit Lacklösemitteln eingestellt wurden, mit dem Hunterlab D48D = Glanzmeßgerät unter einem Winkel von 20° gemessen. Dabei wurden folgende Werte abgelesen:

| | |
|---|---|
| Pigment nach Beispiel 1 | 55,8 |
| Vergleichsbeispiel | 31,8 |

**Beispiel 2**

400 Teile des nach Beispiel 1 erhaltenen ca. 22 %-igen feuchten Rohchinacridons werden in 600 Teilen Wasser verteilt. Dann wird in 15 Minuten eine Lösung von 2 g Alkyl-$C_{20}$-$C_{22}$-trimethyl-ammoniumchlorid 80 %-ig) in 80 g Wasser zugetropft und 30 Minuten verrührt. Anschließend werden 80 g Natronlauge 15 %-ig zugegeben. Nach Ergänzung mit Wasser auf 1500 Teile wird die Suspension mit dem Naßzerkleinerungsgerät "Ultra Turrax" 5 Minuten vermahlen und anschließend 5 Stunden im geschlossenen Gefäß bei 125° C verrührt. Das durch Filtration isolierte und neutral gewaschene Chinacridon wird dann in 100 Teilen Isobutanol und 500 Teilen Wasser suspendiert, 5 Stunden im geschlossenen Gefäß bei 150° C verrührt und schließlich, wie in Beispiel 1 beschrieben, isoliert. Man erhält das lineare trans-Chinacridon in gut kristalliner γ-Modifikation mit einer Ausbeute von mehr als 96 % der Theorie. Die Glanzmessung der hochdeckenden, reinen, roten, schleierfreien Volltonlackierung auf Folie, wie in Beispiel 1 beschrieben, ergab einen Wert von 57,8.

**Beispiel 3**

225 Teile Polyphosphorsäure ($P_2O_5$-Gehalt 85,5 %) werden auf 50° C erwärmt. Dann werden innerhalb von 10 Minuten 3,75 Teile Methanol zugetropft. Nach 30 minütigem Nachrühren wird auf 100° C erwärmt und 2 Stunden bei dieser Temperaturgerührt. Darauf wird auf 120° C geheizt. Nach Erreichung dieser Temperatur werden unter Rühren innerhalb von 1 Stunde 50 Teile 2,5-Dianilinoterephthalsäure eingetragen. Nach 1-stündigem Nachrüren bei 120° C wird 1 Teil Distearyl-dimethylammoniumchlorid eingetragen und eine weitere Stunde bei 120° C verrührt. Anschließend wird die Schmelze mit 300 Teilen Eis und 375 Teilen Wasser hydrolysiert. Das Rohchinacridon wird durch Filtration abgetrennt und mit Wasser neutral gewaschen. Das wäßrig feuchte Rohchinacridon wird in 300 Teilen Wasser suspendiert und mit 75 Teilen

Kalilauge 10 %-ig versetzt. Die so erhaltene Suspension wird mit Wasser auf 750 Teile ergänzt und dann 7 Stunden unter Rühren gekocht. Anschließend wird abfiltriert und mit Wasser neutral gewaschen. Das isolierte neutrale feuchte Chinacridon wird in 300 Teilen Isobutanol 80 %-ig suspendiert und im geschlossenen Gefäß 5 Stunden bei 150° C gerührt und anschließend, wie in Beispiel 1 beschrieben, isoliert. Nach der Trocknung werden 44,5 g blaustichig rotes Pigment der reinen γ-Kristallmodifikation erhalten. Zur Messung des Glanzes wurde ein Folienaufguß, wie in Beispiel 1 beschrieben, hergestellt und vermessen. Der Glanzwert beträgt 52,1.

**Beispiel 4**

In 225 Teile sauren Polyphosphorsäuremethylester ($P_2O_5$-Gehalt ca. 83 %) werden unter Rühren bei 125° C in 1 Stunde 50 Teile 2,5-Dianilinoterephthalsäure eingetragen und 2 Stunden bei dieser Temperatur gerührt. Die Ringschlußschmelze wird mittels 300 Teilen Eis und 375 Teilen Wasser hydrolysiert. Das gebildete Chinacridon wird abfiltriert und mit Wasser neutral gewaschen. Das wäßrig feuchte, ca. 22 %-ige Chinacridon wird in 400 Teilen Wasser suspendiert. Unter Rühren werden in 10 Minuten 18 Teile einer 5 %-igen wäßrigen Cetyltrimethylammoniumchlorid-Lösung zugetropft. Nach 30 minütigem Verrühren werden 75 Teile Kalilauge 10 %-ig zugegeben und mit Wasser auf 750 Teile ergänzt. Die Suspension wird dann, evtl. nach einer Naßmahlung, 10 Stunden bei 100° C gerührt. Anschließend wird abfiltriert und mit Wasser neutral gewaschen. Das isolierte wäßrig feuchte, ca. 18 - 22 %-ige Chinacridon wird in 300 Teilen Isobutanol 80 %-ig suspendiert und im geschlossenen Gefäß 5 Stunden bei 145° C gerührt. Das Isobutanol wird durch Wasserdampfdestillation abgetrennt und das blaustichig rote Pigmente durch Filtration isoliert. Das nach der Trocknung in einer Ausbeute von über 96 % der Theorie erhaltene Pigment liefert bei Einsatz in Lacksystemen hochdeckende, schleierfreie, brillante Volltonlackierungen mit einem hervorragenden Glanz. Der gemäß Beispiel 1 gemessene Glanzwert beträgt 59,5.

**Beispiel 5**

200 Teile des nach Beispiel 4 erhaltenen, ca. 22 %-igen Rohchinacridons werden in 400 Teilen Wasser suspendiert. Unter Rühren wird in 10 Minuten eine Lösung aus 3 g Cetyltrimethylammonium-chlorid 30 %-ig in 15 g Wasser zugetropft. Mach 10-minütigem Verrühren wird eine Lösung aus 4 g Tributylphenolpolyglykoläther (7-9)-sulfat 50 %-ig in 30 g-Wasser in 10 Minuten zugetropft. Nach 20 minütigem Verrühren werden 100 g 7,5 %-ige Natronlauge zugetropft. Danach wird 10 Stunden am Rückfluß gekocht. Das durch Filtration isolierte und neutral gewaschene Chinacridon wird, wie in Beispiel 4 beschrieben, mit Isobutanol gefinisht. Nach der Trocknung werden 45,2 g lineares trans-Chinacridon in reiner γ-Modifikation erhalten. Der Glanzwert des Folienaufgusses beträgt 53,5.

**Beispiel 6**

200 Teile des nach Beispiel 4 erhaltenen wäßrig feuchten 22 %-igen Rohchinacridons werden in 400 Teilen Wasser suspendiert. In 10 Minuten werden 10 Teile einer schwach essigsauren wäßrigen 10 %-igen Lösung von Dehydroabietylamin zugetropft. Nach 10-minütigem Verrühren werden 100 Teile 7,5 %-ige Kalilauge zugesetzt. Dann wird die Sus-20 pension 5 Minuten mit einem Ultra-Turrax vermahlen und anschließend 5 Stunden unter Rühren gekocht. Darauf wird abfiltriert und neutral gewaschen. Das neutrale wäßrig feuchte Chinacridon wird in 300 g Isobutanol 80 %-ig suspendiert. Dann werden 3 g Diisodecylsulfobernsteinsäureester-Natrium 65 %-ig in 40 g Wasser zugetropft. Anschließend wird auf 150° C geheizt und 5 Stunden bei dieser Temperatur gehalten. Das Pigment wird, wie in Beispiel 1 beschrieben, isoliert. Die Ausbeute liegt über 96 % der Theorie. Der Glanzwert des Folienaufgusses des hochdeckenden Volltonlackes beträgt 54,0.

**Patentansprüche**

1. Verfahren zur Herstellung der deckenden Form der γ-Kristallmodifikation des unsubstituierten linearen trans-Chinacridons mit verbesserter Farbstärke und höherem Glanz der damit hergestellten Lackierung, dadurch gekennzeichnet, daß man a) beim bekannten Ringschluß der 2,5-Di-phenylamino-terephthalsäure in hochkonzentrierter Polyphosphorsäure oder in saurem Polyphosphorsäureester zum Chinacridon, und/oder b) bei der bekannten Hydrolyse der nach a) erhaltenen Schmelze des Chinacridons, und/oder c) dem bekannten wäßrigen Alkaliauszug des nach b) erhaltenen Chinacridons und/oder d) zum bekannten Finish des nach a) erhaltenen Chinacridons 0,5 bis 10 Gewichtsprozent, bezogen auf Chinacridon, oberflächenaktive Mittel zusetzt.

2. Verfahren nach Anspruch 1, dadurch gekennzeichnet, daß man als oberflächenaktive Mittel kationaktive und/oder anionaktive Verbindungen zusetzt.

3. Verfahren nach Anspruch 1, dadurch

gekennzeichnet, daß man als oberflächenaktive Mittel nichtionogene Verbindungen zusetzt.

4. Verfahren nach Anspruch 2, dadurch gekennzeichnet, daß man als kationaktive Verbindung permethyliertes Talgfettpropylendiamin, Stearyltrimethylammonium (Alkyl-$C_{20}$-$C_{22}$trimethyl-ammonium), Dioctyldimethylammonium, Distearyldimethylammonium, Didecyldimethylammonium, Cetyltrimethylammonium, Benzylcocosalkyldimethylammonium, Dicocosalkyldimethylammonium, Cocosalkyl-2,4-dichlorbenzyl-dimethyrammonium, Stearylbenzyldimethylamlmonium, Di-β-palmitinsäureisopropylesterdimethylammonium, permethyliertes N-Stearoyl-diäthylentriamin, permethyliertes N-Stearoyl-triäthylentetramin, Laurylpyridinium, 2-Hydroxy-5-chlor-1,3-xylylenbispyridinium, 2-Hydroxy-5-isoocryl-1,3-xylylenbispyridinium, 2-Hydroxy-5-t-butyl-1,3-xylylenbis-pyridinium, 2-Hydroxy-5-n-nonyl-1,3-xylylenbispyridinium, 2-Methoxy-5-isooctyl-1,3-xylylenbispyridinium, 2-Hydroxy-5-isooctyl-1,3-xylylenbischinolinium, 2-Hydroxy-5-isooctyl-1,3-xylylenbisisochinolinium, Hexadexyltributylphosphonium, Äthyltrioctylphosphonium und/oder Tetrabutylphosphonium, wobei das zugehörige Anion verchieden sein kann, zusetzt.

5. Verfahren nach Anspruch 2, dadurch gekennzcichnet, daß man als anionaktive Verbindung ein Alkyl $C_8$-$C_{22}$ sulfonat, Alkyl-(poly)-glykoläthersulfonat, Alkylarylsulfonat, Alkylphenol-(poly)-glykoläthersulfat, Alkylsulfamidoacetat, Fettsäuretaurid, Fettsäure-N-methyltaurid, Fettsäuresarkosid ein Salz einen Sulfobernsteinsäureesters und/oder ein Harzsäurederivat zusetzt.

6. Verfahren nach Anspruch 3, dadurch gekennzeichnet, daß man als nichtionogene Verbindung Dehydroabietylamin zusetzt.

## Claims

1. A process for preparing the high-hiding form of the γ-crystal modification of unsubstituted linear transquinacridone having improved tinctorial strength and producing a coating of higher gloss, which comprises carrying out a) the known cyclization of 2,5-diphenylaminoterephthalic acid in highly concentrated polyphosphoric acid or in acid polyphosphoric acid ester to the quinacridone and/or b) the known hydrolysis of the quinacridone melt obtained in a) and/or c) the known aqueous alkali extraction of the quinacridone obtained in b) and/or d) the known finishing of the quinacridone obtained in a) in the presence of 0.5 to 10 percent by weight, based on quinacridone, of surface-active agents.

2. The process as claimed in claim 1, wherein the surface-active agents are cationic -and/or anionic compounds.

3. The process as claimed in claim 1, wherein the surface-active agents are nonionic compounds.

4. The process as claimed in claim 2, wherein the cationic compound is permethylated tallow-propylenediamine, stearyltrimethylammonium (alkyl- $C_{20}$-$C_{22}$-trimethylammonium), dioctyldimethylammonium, distearyldimethylammonium, didecyldimethylammonium, cetyltrimethylammonium, benzylcocoalkyldimethylammonium, di-cocoalkyldimethylammonium, cocoalkyl-2,4-dichlorobenzyldimethylammonium, stearylbenzyldimethylammonium, di-β-isopropoxycarbonylhexadecyldimethylammonium, permethylated N-stearoyldiethylenetriamine, permethylated N-stearoyltriethylenetetramine, laurylpyridinium, 2-hydroxy-5-chloro-1,3 xylylenebispyridinium, 2-hydroxy-5-isooctyl-1,3-xylylenebispyridinium, 2-hydroxy-5-t-butyl-1,3-xylylenebispyridinium, 2-hydroxy-5-n-nonyl-1,3-xylylenebispyridinium, 2-methoxy-5-isooctyl-1,3-xylylenebispyridinium, 2-hydroxy-5-isooctyl-1,3-xylylenebisquinolinium, 2-hydroxy-5-isooctyl-1,3-xylylenebisisoquinolinium, hexadecyltributylphosphonium, ethyltrioctylphosphonium and/or tetrabutylphosphonium, in which the associated anion can vary.

5. The process as claimed in claim 2, wherein the anionic compound is an alkyl $C_8$-$C_{22}$ sulfonate, alkyl (poly)glycol ether sulfonate, alkylarylsulfonate, alkylphenol (poly)glycol ether sulfate, alkyl sulfamidoacetate, fatty acid tauride, fatty acid N-methyltauride, fatty acid sarcoside, a salt of a sulfosuccinate and/or a resin acid derivative.

6. The process as claimed in claim 3, wherein the nonionic compound is dehydroabietylamine.

## Revendications

1. Procédé pour la préparation de la forme couvrante de la forme cristalline gamma de la trans-quinacridone linéaire non-substituée, avec un pouvoir colorant amélioré et un brillant plus élevé du vernis préparé à partir d'elle, caractérisé en ce qu'on ajoute 0,5 à 10 % en poids, par rapport à la quinacridone, d'agents tensioactifs, a) lors de la cyclisation, connue, de l'acide diphénylamino-2,5 téréphtalique dans de l'acide polyphosphorique à haute concentration ou dans un polyphosphate acide, donnant de la quinacridone, et/ou b) lors de l'hydrolyse, connue, de la masse fondue de la quinacridone obtenue selon a), et/ou c) à l'extrait aqueux aux alcalis, connu, de la quinacridone obtenue selon b), et/ou d) lors du traitement final de la quinacridone obtenue selon a).

2. Procédé selon la revendication 1, caractérisé en ce qu'on ajoute comme agents tensioactifs

des composés cationiques et/ou anioniques.

3. Procédé selon la revendication 1, caractérisé en ce qu'on ajoute comme agents tensioactifs des composés nonioniques.

4. Procédé selon la revendication 2, caractérisé en ce qu'on ajoute comme composé cationique l'un des composés suivants: (suif)-propylènediamine perméthylée, stéaryltriméthylammonium, (alkyle en $C_{20}$-$C_{22}$) triméthylammonium, dioctyldiméthylammonium, distéaryldiméthylammonium, didécyldiméthylammonium, cétyltriméthylammonium, benzyl-(huile de coprah)-diméthylammonium, di(huile de coprah)-diméthylanmonium, (huile de coprah)-dichloro-2,4 benzyldiméthylammonium, stéarylbenzyldiméthylammonium, di-bêta-palmitate d'isopropyl-diméthylammonium, N-stéaroyl-diéthylènetriamine perméthylée, N-stéaroyltriéthylènetétramine perméthylée, laurylpyridinium, hydroxy-2 chloro-5 xylylène-1,3 bispyridinium, hydroxy-2 isooctyl-5 xylylène-1,3 bispyridinium, hydroxy-2 tert-butyl-5 xylylène-1,3 bispyridinium, hydroxy-2 n-nonyl-5 xylylène-1,3 bispyridinium, méthoxy-2 isooctyl-5 xylylène-1,3 bispyridinium, hydroxy-2 isooctyl-5 xylylène-1,3 bisisoquinoléinium, hydroxy-2 isooctyl-5 xylylène-1,3 bisisoquinoléinium, hexadécyltributylphosphonium, éthyltrioctylphosphonium et/ou tétrabutylphosphonium, l'anion correspondant pouvant être différent.

5. Procédé selon la revendication 2, caractérisé en ce qu'on ajoute comme composé anionique un (alkyle en $C_8$-$C_{22}$)-sulfonate, un alkylsulfonate polyoxyéthyléné, un alkylarylsulfonate, un alkylphénolsulfate polyoxyéthyléné, un alkylsulfamidoacétate, un sel d'acide gras-taurine, un sel d'acide gras-N-méthyltaurine, un acide gras-sarcoside, un sel d'un sulfosuccinate et/ou un dérivé d'un acide résinique.

6. Procédé selon la revendication 3, caractérisé en ce qu'on ajoute comme composé non-ionique de la déhydroabiétylamine.